# EUROPÄISCHE PATENTSCHRIFT

(11) **EP 0 919 809 B1**
(45) Veröffentlichungstag und Bekanntmachung des Hinweises auf die Patenterteilung: **24.08.2005**
(21) Anmeldenummer: 98122084.1
(22) Anmeldetag: 21.11.1998
(51) Int. Cl.: G01N 29/22, G01N 29/24

(54) **Sendesystem für Ultraschallwellen**
Transmission system for ultrasonic waves
Système d'émission des ondes ultrasonores

(30) Priorität: 25.11.1997 DE 19752154
(43) Veröffentlichungstag der Anmeldung: 02.06.1999
(73) Patentinhaber: BETRIEBSFORSCHUNGSINSTITUT VDEh, INSTITUT FÜR ANGEWANDTE FORSCHUNG GmbH, D-40237 Düsseldorf (DE)
(72) Erfinder: Oberhoff, Dietmar, 42799 Leichlingen (DE); Coen, Günther, 40627 Düsseldorf (DE); Luhn, Ernst, 42781 Haan (DE); Lorenz, Gerhard, 47807 Krefeld (DE)
(74) Vertreter: König, Reimar

(56) Entgegenhaltungen:
- WO-A-97/01768
- US-A- 4 058 002
- US-A- 4 307 615
- US-A- 5 199 299
- US-A- 5 295 485
- US-A- 5 653 235
- US-A- 5 817 024

## Beschreibung

Die Erfindung betrifft ein Sendesystem zum Generieren von Ultraschallwellen für die Werkstoffprüfung.

Zur Erzeugung derartiger Ultraschallwellen ist bekannt, einen piezoelektrischen Ultraschallwandler einzusetzen. Nachteilig bei der piezoelektrischen Ultraschallerzeugung ist aber, daß die Übertragung der Ultraschallwellen von dem Piezogeber auf den zu prüfenden Werkstoff ein Koppelmittel erfordert, da Luft als Übertragungsmedium keine für die Übertragung der Schallwellen ausreichenden Übertragungseigenschaften besitzt.

Die Verwendung eines Koppelmittels steht jedoch einer Prüfung von während der Prüfung bewegten Werkstoffen oder heißen Werkstoffen im Wege. Unter den Bedingungen heißer oder bewegter Werkstoffe ist ein berührungsloses Prüfsystem erforderlich bzw. dringend geboten.

Zur berührungslosen koppelmittelfreien Ultraschallprüfung ist die elektrodynamische/elektromagnetische Ultraschallprüfung bekannt. Diese beruht in ihrem elektrodynamischen Anteil auf der Ausnutzung der Lorenz-Kraft und in ihrem elektromagnetischen Anteil auf der Ausnutzung des Magnetostriktions-Effektes zur Erzeugung von Schallwellen im Werkstoff. Die erzeugte Ultraschallamplitude ist dabei proportional zur Stromdichte an der Materialoberfläche.

Die Lorenz-Kraft wird dadurch erzeugt, daß in einem statischen Magnetfeld ein Wirbelstrom am Werkstoff induziert wird. Dadurch wird das Metallgitter zu einer Schwingung angeregt, die sich als Ultraschallwelle fortpflanzt. Die Merkmale dieser Ultraschallwelle sind durch die Wandlergeometrie und die Wechselstromfrequenz des Wirbelstroms vorgegeben.

Durch den Wechselstrom wird ferner ein Magnetostriktions-Effekt erzeugt, indem sich das magnetische Wechselfeld mit dem statischen Magnetfeld überlagert. Die periodische Magnetisierungsänderung erzeugt eine Ultraschallfrequenz in einem metallischen Werkstoff.

Bekannte Sender zur Erzeugung einer elektrodynamischen/elektromagnetischen Ultraschallwelle bestehen im wesentlichen aus zwei elektronischen Einheiten, die über Leitungen miteinander verbunden sind.

Eine funktionierende Ultraschallprüfung erfordert für das Sendesystem einen Sender für die Signalgenerierung und einen Wandler zur Umsetzung des Signals in eine Ultraschallwelle im Prüfling. Das Sendesystem muß bei üblichen Prüfsystemen in der Lage sein, eine Impulsleistung von ca. 30 kW am Ausgang des Senders zu erzeugen, von denen dann ca. 18 kW in den Zuleitungen verloren gehen und ca. 12 kW im Sendewandler für die Ultraschallerzeugung verfügbar sind. Dies läßt sich bei bekannten Sendesystemen bei Verwendung von Sendern mit ca. 250 Volt Wechselstromspannung dadurch erreichen, daß mit Hilfe eines unidirektionalen Wandlers mit jeweils im Abstand einer viertel Wellenlänge versetzten Sendespulen (λ/4-Versatz) durch eine Phasenverschiebung ein Überlagerungseffekt und damit eine Verstärkung der Ultraschallwelle in einer Abstrahlrichtung und eine Löschung in der anderen Abstrahlrichtung im Prüfling erreicht wird.

Mit Sendern von ca. 250 Volt Wechselspannung ist so eine Prüflingsimpulsleistung von ca. 30 kW zu erreichen, mit der eine Ultraschallmessung mit einem entsprechenden Empfänger möglich ist. Die maximale Sendespannung ist allerdings durch die elektrische Durchschlagfestigkeit des Wandlers begrenzt. Als Wandler werden gewickelte Kupferlackdrahtspulen eingesetzt, die an den Innenwiderstand des Systems angepaßt sein müssen. Üblich sind Spulen mit einer Impedanz von ca. 10 Ω. Die Spulen-Impedanz liegt damit im Bereich der Impedanz der üblichen Leitungsverbindung zwischen Sender und Wandler.

Zur Erzeugung der Senderspannung von 250 Volt Wechselspannung werden im Stande der Technik übliche 48.3cm (19-Zoll) Einschübe in entsprechenden Schaltschränken zur Verfügung gestellt. Die Sender sind über Kabelleitungen mit dem Wandler verbunden. Im Bereich des Wandlers ist zur Verstärkung und zum Ausgleich von Parasitärimpedanzen eine Wandlerelektronik mit entsprechenden Kapazitäten erforderlich, die in der Praxis von dem Sender getrennt im Bereich des Prüflings angeordnet ist und einerseits mit dem Sender und andererseits mit der direkt über dem Prüfling angeordneten Sendespule über Kabelleitung verbunden ist.

Die hohe Ausgangsspannung von 250 Volt ist bereits aufgrund des hohen Leistungsverlustes durch die Kabelleitungen zwischen Senderplatine, Wandlerelektronik (Frontendelektronik) und Wandler erforderlich. Bei der üblichen hohen Senderleistung handelt es sich somit um eine Konsequenz der Auswahl eines geeigneten Senders für die hohe Impedanz des Sendesystems.

Um die erforderliche Senderleistung zu senken, wird somit seit längerer Zeit versucht, die Leitungswege durch entsprechende Anordnung der Wandlerelektronik und der Schaltschränke mit Senderplatine zu verringern. Aufgrund der konstruktiven Gegebenheiten, beispielsweise in einer Walzstraße, sind jedoch bei der erforderlichen Senderart mit der entsprechend hohen Spannung aus sicherheitstechnischen Gründen Schaltschränke und damit ein Mindestabstand zum Prüfling erforderlich, wobei die Schaltschränke wiederum, um eine Störung der Elektronik sowie die nachteilige Wirkung der in der Walzstraße verwendeten Beize auf die Elektronik zu vermeiden, einen gewissen Abstand zur Walzstraße aufweisen müssen.

Darüber hinaus führen die Abmessungen der Schaltschränke, die neben der Senderelektronik auch die üblichen teilweise aus 48 Europaplatinen bestehenden Kapazitätsbinaden oder Dekaden zur exakten Einstellung der Kapazität des Sendesystems aufnehmen müssen, zu Positionierungsschwierigkeiten. Die Kapazitätsbinaden sind jedoch wiederum zum Ausgleich und zur Einstellung der Impedanz des Sendesystems erforderlich.

Weitere Schwierigkeiten bestehen darin, daß der Schwingkreis zur Verstärkung des Signals eine saubere konstruktive Interferenz nur bei exakter Impulserzeugung bewirkt, die exakte Impulserzeugung aber bei bekannten Sendern aufgrund einer leitungsimpedanzenbedingten Phasenverschiebung nicht erreicht wird.

US4058002 offenbart einen elektromagnetischen Wandler in Form einer gedrückten Schaltung, der über Leitungen mit einem Impulssignalgenerator verbunden ist. US4307615 offenbart ebenfalls eine Verbindung eines Wandler mit einem Signalgenerator über elektrische Leitungen.

Der Erfindung liegt somit das Problem zugrunde, ein Sendesystem für die Ultraschallprüfung zu schaffen, welches eine höhere Effektivität und einen geringeren Herstellungsaufwand als bekannte Sendesysteme besitzt.

Das Problem wird gelöst durch ein Sendesystem gemäß Anspruch 1, bei dem der Sender, der Verstärker und der Wandler nicht an die Impedanz der elektrischen Leitung angepaßt werden, sondern die Impedanz des Ultraschallwandlers an den Verstärker angepaßt wird und damit dessen Parameter weitgehend ausnutzt.

Der Erfindung liegt der Gedanke zugrunde, die Leistungsausbeute des Sendesystems durch Vermeiden der Leitungsimpedanz zu erhöhen und dabei das Vorurteil zu überkommen, daß ein bestimmter Leitungsweg zwischen Sender und Wandler unumgänglich ist. Denn gerade der verkürzte Leitungsweg erlaubt den Einsatz eines kleineren Sendesystems, welches wiederum eine weitere Verkürzung des Leitungweges erlaubt, da bei ausreichender Miniaturisierung eine Anordnung des Senders direkt neben dem Wandler möglich ist.

Ein weiterer erheblicher Vorteil der vermiedenen Leitungswege bei dem erfindungsgemäßen Sendesystem besteht darin, daß die leitungsbedingte Phasenverschiebung weitgehend vermieden wird und in Verbindung mit einer vorzugsweise digitalen Sendetechnik eine weitgehend exakte Pulsverstärkung erreicht wird. So läßt sich eine saubere Realisierung der konstruktiven Interferenz erreichen.

Durch Anpassen der Impedanz der Wandlersegmente an die Leistungsschalter lassen sich deren Parameter optimal ausnutzen. Die verkürzten Leitungswege fallen dabei elektronisch nicht mehr ins Gewicht. Ein üblicher Leistungs-MOSFET (75V,240A) kann beispielsweise bei einer Wandlersegmentimpedanz von 0,3125 Ω ausgenutzt werden, so daß sich mit einem Sendersegment bei 75 V im Wandler 18 kW erreichen lassen. Die Impedanz des dabei verwendeten mehradrigen Kabels (Leitungslänge ca. 10 mm) ist vernachlässigbar. Für einen Sender, bestehend aus 12 Segmenten, ergibt sich eine gesamte Impulsleistung von 216 kW, die ohne Leitungsverluste im Sendewandler für die Ultraschallerzeugung verfügbar ist. Dies bedeutet im Ergebnis einen Leistungsgewinn des Sendesystems von einem Faktor 17,8 bzw. eine Erhöhung der Ultraschallamplitude um beispielsweise 25 dB bei 456 kHz.

Der Wandler ist vorzugsweise als flachgedruckte Schaltung mit flachliegenden Windungen ausgestaltet. Die Wandlerplatine läßt sich bei Verwendung flexibler Leiterplatten an gekrümmte Prüfteiloberflächen anpassen. Alternativ kann jedoch auch ein aus segmentierten Spulen aus Kupferlackdraht aufgebauter Wandler verwendet werden.

Als Sender findet vorzugsweise ein quarzgesteuertes PAL Verwendung. Alternativ lassen sich jedoch auch andere signalgenerierende elektronische Bauteile möglichst geringer Baugröße, wie beispielsweise ASICS, und auch diskrete Schaltungen in der erfindungsgemäßen Anordnung einsetzen.

Die bevorzugte Verwendung integrierter Bauteile für das Sendesystem erlaubt eine weitere Reduzierung der Platinengröße.

Die kurzen Leitungswege bei dem erfindungsgemäßen Sendesystem erlauben es, auch auf die üblichen Kapazitätsbinaden in Form zahlreicher Kondensatoren, die die Funktion eines Ausgleichs von Parasitärinduktivitäten erfüllen und bei bekannten Sendesystemen selbst bei Verwendung integrierter Bauteile typischerweise etwa drei 48.3cm (19-Zoll) Einschüben mit 48 Europakarten erfordern, zu verzichten, da die Parasitärinduktivitäten im wesentlichen auf die Leitungswege zurückzuführen sind, die bei der erfindungsgemäßen Lösung entfallen. Das erfindungsgemäße Sendesystem ist somit nicht nur wesentlich kleiner als bekannte Sendesysteme, sondern erfordert auch erheblich weniger Bauteile. Die geringe Größe ermöglicht auch Schutzmaßnahmen gegen störende Einflüsse der Walzstraße, wie beispielsweise das Eingießen der Schaltung in Kunstharz.

Je kleiner das Sendesystem gestaltet werden kann, desto weitreichender sind die Einsatzmöglichkeiten eines Sendesystems, welches durch die Nähe zum Ultraschallwandler folglich auch in unmittelbarer Nähe zum Prüfling angeordnet ist.

In der bevorzugten Ausgestaltung ist der Wandler direkt mit den Leistungschaltern verbunden.

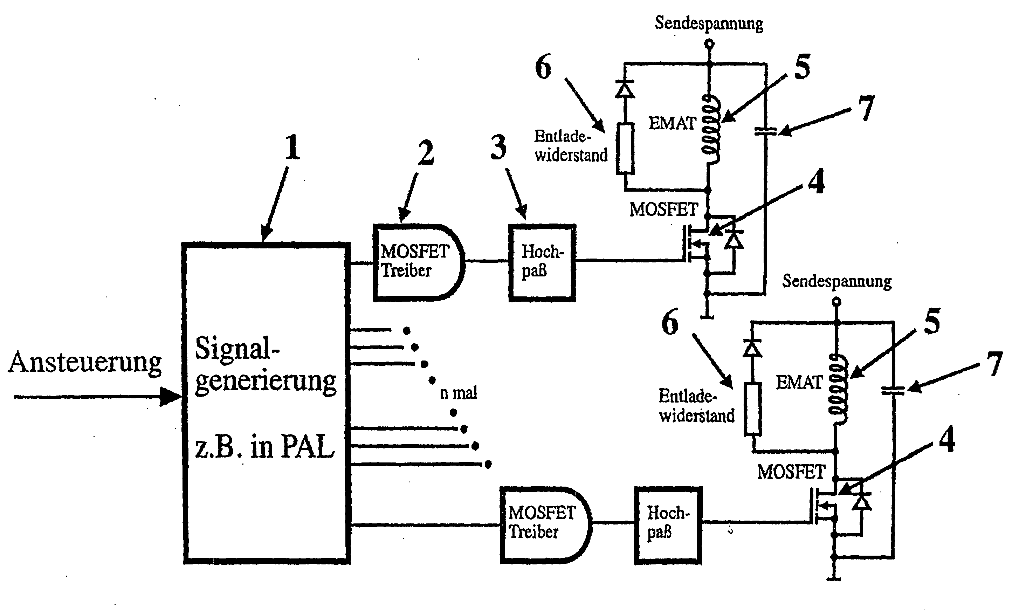

Im folgenden wird die Erfindung anhand eines in der Zeichnung dargestellten Ausführungsbeispiels des näheren erläutert.

Das Ultraschallsendesystem besteht aus einem PAL 1, welches mit einer geeigneten Ansteuerung verbunden ist und ein programmierbares Pulsschema zur Ansteuerung des Leitungsteils der einzelnen Wandlersegmente erzeugt. Über die Ansteuerung des PAL 1 kann ferner eine von der gewünschten Pulsverstärkung abhängige Zahl von Signalen erzeugt werden. Die Signale werden über einen MOSFET-Treiber 2 und einen üblichen Hochpaßfilter 3 an die Leistung-MOSFETs 4 geleitet, die unmittelbar mit den Spulensegmenten des Wandlersegmentes 4,5,6,7 verbunden sind.

Jedes Wandlersegment 4,5,6,7 stellt einen Entladekreis mit einem Entladewiderstand 6 und einem Kondensator 7 dar, der einen kontinuierlichen Spannungsaufbau und eine schlagartige Entladung zur Erzeugung des Oberflächenstromes und der Ultraschallwelle im Prüfling bewirkt.

Der Kondensator 7 ist in örtlicher Nähe zur Spule angeordnet. Der Widerstand 6 ist an die Impedanz der Spule angepaßt.

Mit jedem der dargestellten Wandlersegmente 4,5,6,7 des in einem Abstand von ca. 0,6mm über dem Prüfling angeordneten Wandlers läßt sich ein Ultraschallpuls generieren, der durch entsprechende Anordnung der Spulen im λ/4-Versatz zu einer sauberen Verstärkung und unidirektionalen Ausrichtung der Ultraschallwelle im Wege der konstruktiven Interferenz führt.

Durch die exakte Signalgenerierung mit Hilfe eines PAL und exakter Steuerung des Entladungszeitpunkts des Entladekreises mit Hilfe der MOSFETs wird Ultraschallerzeugung in bezug auf die Phasenlage der interferierenden Einzelsignale so akkurat, daß die bekannten Einbußen bei der interferenzausnutzenden Wellenverstärkung ausbleiben.

Durch die Verwendung einer gedruckten Spule mit der beschriebenen Ausführungsform läßt sich der innere Widerstand der Spule exakt an den Ausgangswiderstand des MOSFETs anpassen (z.B. bei 75 V und 240 A auf genau 0,3125 Ω), was eine optimale Ausnutzung des MOSFETs erlaubt. Bei der Verwendung von Wandlern aus segmentierten Spulen aus Kupferlackdraht gilt sinngemäß das gleiche, jedoch ist sowohl die Präzision der Anpassung als auch die Reproduzierbarkeit des Wandlers selbst bei der gedruckten Spule höher.

Bei der Verwendung von Wandlerspulen, die um 0λ, λ/4, 1λ, 5λ/4 usw. versetzt sind und Steuersignalen, die um T/4, 5T/4 usw. verzögert und Steuersignalen, die um 0T, 1T usw. verzögert und invertiert sind, läßt sich eine besonders gute Abstrahlcharakteristik erreichen.

## Patentansprüche

1. Sendesystem zum Erzeugen von Ultraschallwellen durch elektromagnetische Ultraschallwandlung mit einem ansteuerbaren Signalgenerator, einem über eine Leitung mit dem Signalgenerator verbundenen Ultraschallwandler und einem Verstärker, wobei, der Signalgenerator, der Verstärker und der Ultraschallwandler nicht an die Impedanz der elektrischen Leitung angepaßt sind, sondern die Impedanz des Ultraschallwandlers an den Verstärker.

2. Sendesystem nach Anspruch 1, **dadurch gekennzeichnet, daß** das Sendesignal mittels PAL (1) oder ASIC generiert wird.

3. Sendesystem nach Anspruch 1 oder 2, **dadurch gekennzeichnet, daß** als Wandler eine gedruckte Schaltung mit flachliegenden Windungen (5) verwendet wird.

4. Sendesystem nach einem oder mehreren der Ansprüche 1 bis 3, **dadurch gekennzeichnet, daß** als Leistungsschalter (4) ein Feldeffekttransistor verwendet wird.

5. Sendesystem nach einem oder mehreren der Ansprüche 1 bis 4, **dadurch gekennzeichnet, daß** die Sendespule (5) mit einem Entladewiderstand (6), dessen Widerstand der Impedanz der Spule (5) entspricht, verwendet wird.

6. Sendesystem nach einem oder mehreren der Ansprüche 1 bis 5, **dadurch gekennzeichnet, daß** der Kondensator (7) des Entladekreises (5,6) möglichst in örtlicher Nähe zur Spule (5) angeordnet ist.

## Claims

1. Transmitting system for generating ultrasonic waves by electromagnetic ultrasonic transduction with a controllable signal generator, an ultrasonic transducer linked to the signal generator and an amplifier, whereby the signal generator, the amplifier and the ultrasonic transducer are not matched to the impedance of the electrical line, but the impedance of the ultrasonic transducer is matched to the amplifier.

2. Transmitting system according to claim 1, **characterised in that** the transmitting signal is generated by means of PAL (1) or ASIC.

3. Transmitting system according to claim 1 or 2, **characterised in that** as the transducer, a printed circuit with flat windings (5) is used.

4. Transmitting system according to one or more of the claims 1 to 3, **characterised in that** a field effect transistor is used as the power switch (4).

5. Transmitting system according to one or more of the claims 1 to 4, **characterised in that** the transmitting coil (5) is used with a discharge resistance (6), whose resistance corresponds to the impedance of the coil (5).

6. Transmitting system according to one or more of the claims 1 to 5, **characterised in that** the capacitor (7) of the discharge circuit (5, 6) is arranged in the closest possible proximity to the coil (5).

## Revendications

1. Système d'émission pour générer des ondes ultrasonores par conversion ultrasonore électromagnétique avec un générateur de signaux commandable, un transducteur ultrasonore relié au générateur de signaux par une ligne et un amplificateur, le générateur de signaux, l'amplificateur et le transducteur ultrasonore n'étant pas adaptés à l'impédance de la ligne électrique, mais l'impédance du transducteur ultrasonore étant adaptée à l'amplificateur.

2. Système d'émission selon la revendication 1, **caractérisé par le fait que** le signal d'émission est généré au moyen d'un PAL (1) ou d'un ASIC.

3. Système d'émission selon la revendication 1 ou 2, **caractérisé par le fait que** l'on utilise comme transducteur un circuit imprimé avec des spires à plat (5).

4. Système d'émission selon l'une des revendications 1 à 3, **caractérisé par le fait que** l'on utilise comme interrupteur de puissance (4) un transistor à effet de champ.

5. Système d'émission selon l'une ou plusieurs des revendications 1 à 4, **caractérisé par le fait que** l'on utilise la bobine d'émission (5) avec une résistance de décharge (6) dont la résistance correspond à l'impédance de la bobine (5).

6. Système d'émission selon l'une ou plusieurs des revendications 1 à 5, **caractérisé par le fait que** le condensateur (7) du circuit de décharge (5, 6) est disposé, autant que possible, près de la bobine (5).
